**Europäisches Patentamt**

**European Patent Office**

**Office européen des brevets**

(19)

(11) Veröffentlichungsnummer: **0 075 119**
**A1**

(12) ## EUROPÄISCHE PATENTANMELDUNG

(21) Anmeldenummer: **82107684.1**

(22) Anmeldetag: **23.08.82**

(51) Int. Cl.³: **C 09 D 5/04**, C 09 D 7/00

(30) Priorität: **05.09.81 DE 3135183**

(43) Veröffentlichungstag der Anmeldung: **30.03.83**
**Patentblatt 83/13**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Prater, Klaus, Dr., Bodelschwinghstrasse 22, D-4150 Krefeld-Bockum (DE)**
Erfinder: **Keesen, Heinz, Adlerstrasse 25, D-4130 Moers 1 (DE)**

(54) Thixotropiermittel für ungesättigte Polyesterharze.

(57) Kombinationen aus Cyclohexylamiden gesättigter Fettsäuren und oligomeren Esteramiden eignen sich hervorragend als Thixotropiermittel für ungesättigte Polyesterharze.

EP 0 075 119 A1

ACTORUM AG

0075119

BAYER AKTIENGESELLSCHAFT    5090 Leverkusen, Bayerwerk

Zentralbereich

Patente, Marken und Lizenzen    Pv/bo/c

## Thixotropiermittel für ungesättigte Polyesterharze

Die Erfindung betrifft ein für ungesättigte Polyesterharze geeignetes Thixotropiermittel, bestehend aus mindestens einem Cyclohexylamid einer gesättigten höheren Fettsäure und mindestens einer weiteren Komponente.

Es ist bekannt, Verdickungs- und Thixotropiermittel zu verwenden, um das Ablaufen auf senkrechte oder geneigte Flächen frisch aufgetragener Beschichtungen, das Entmischen begrenzt verträglicher Lackbindemittel bzw. die Sedimentation schwerer Füllstoffe zu verhindern oder die Verstreichbarkeit zu verbessern ("Butter-Effekt").

Als Verdickungs- und Thixotropiermittel sind in der Ver-gangenheit insbesondere feinpulverige, unlösliche anor-ganische Stoffe, wie hochdisperse Kieselsäure oder modifizierter Smektit, ebenso wie organische Verbindungen, z.B. modifizierte ungesättigte Polyester, Polyesteramide, polymere Amide, Polyurethane und Cyclohexylamide ungesättigter höherer Fettsäuren (DE-AS 10 20 428, 11 82 816, 12 17 611, 12 73 192, 15 69 331, 17 45 347), empfohlen worden.

Le A 21 214 -Europa

Ideale Thixotropiermittel sollten bei möglichst niedriger Temperatur in die Harze eingearbeitet werden können (um die Risiken von Farbänderungen und einer Beeinträchtigung der Lagerstabilität zu vermeiden), ihre Wirkung möglichst temperaturunabhängig entfalten, weder zum Sedimentieren noch zum Ausschwimmen auch bei längerem Lagern der thixotropierten Harze neigen und die mechanischen Eigenschaften der aus den thixotropierten Harzen hergestellten gehärteten Formkörper möglichst wenig beeinflussen. Die Thixotropiermittel des Standes der Technik genügen nicht der Gesamtheit dieser Anforderungen.

Gegenstand der Erfindung ist ein Thixotropiermittel bestehend aus

A) mindestens einem Cyclohexylamid einer gesättigten Fettsäure mit mindestens 10 C-Atomen und

B) einem oder mehreren oligomeren Esteramiden mit einem mittleren Molekulargewicht $\overline{M}_n$ von 600 bis 3000, vorzugsweise von 750 bis 2500, mit einem Gehalt an Carbonsäureamidgruppen -CO-NH- von 1,5 bis 15 Gew.-% und einem Gehalt an Carboxylatgruppen $-C-O-$ von 2 bis 13 Gew.-% aus
$\quad\quad\;\overset{\|}{\underset{O}{}}$

a) ungesättigten Fettsäuren mit mindestens 10 C-Atomen und aliphatischen Dicarbonsäuren mit mindestens 10 C-Atomen,

Le A 21 214

b)      cycloaliphatischen Diolen mit 6 bis 18 C-Atomen und

c)      aliphatischen Diaminen mit 2 bis 10 C-Atomen und/oder

C)      einem oder mehreren Bisimiden aus

a)      aliphatischen, cycloaliphatischen oder aromatischen, cyclische Imide bildenden Dicarbonsäuren mit 4 bis 12 C-Atomen und

b)      aliphatischen Diaminen mit 2 bis 10 C-Atomen,

mit der Maßgabe, daß das Gewichtsverhältnis der Komponenten A:B:C von 1:0,4:1 bis 1:2,3:2,5, vorzugsweise 1:0,7:1 bis 1:1,5:2,0, oder - in Abwesenheit von B oder C - das Gewichtsverhältnis der Komponenten A:B oder A:C von 1:0,4 bis 1:1,97, vorzugsweise 1:0,6 bis 1:1,5, betragen.

Die erfindungsgemäßen Thixotropiermittel kann man z.B. nach dem Lösen des ungesättigten Polyesters im copolymerisierbaren Monomeren bei Temperaturen von 80 bis 120°C zusetzen. In der Regel wird man kurze Zeit bis zur vollständigen Lösung des Mittels im Polyesterharz warten und dann in gewohnter Weise weiter abkühlen. Es wird angenommen, daß das Thixotropiermittel beim Abkühlen in sehr feinverteilter Form auskristallisiert und dem Polyesterharz auf diese Weise die erwünschte Thixotropie verleiht.

Die Fettsäurereste der Cyclohexylamide A besitzen 10 bis vorzugsweise 30 C-Atome und sind vorzugsweise Reste der Caprin-, Laurin-, Myristin-, Palmitin-, Stearin-, Oxystearin- und Behensäuren. Die Eignung der Cyclohexylamide A ist aus der DE-AS 12 73 192 bekannt.

Bevorzugte ungesättigte Fettsäuren B,a) sind Leinölfettsäure, Tallölfettsäure und Sojaölfettsäure. Bevorzugte aliphatische Dicarbonsäuren B,a) sind Sebacinsäure, Decamethylendicarbonsäure sowie jene Dicarbonsäuren, die durch die Dimerisierung ungesättigter Fettsäuren erhalten werden können.

Der Gehalt an einwertigen, ungesättigten Fettsäuren wird durch ihre Funktion als Kettenabbrecher und das gewünschte Molekulargewicht des Esteramids festgelegt.

Bevorzugte cycloaliphatische Diole B,b) sind Cyclohexandiole, Dimethylolcyclohexane und Perhydrobisphenol-A.

Bevorzugte Diamine B,c) sind Ethylendiamin, Tetramethylendiamin, Hexamethylendiamin und Decamethylendiamin.

Bevorzugte Dicarbonsäuren C,a) sind Bernsteinsäure, Maleinsäure, Phthalsäure, Tetra- und Hexahydrophthalsäure sowie Tetrachlorphthalsäure.

Bis-maleinsäureimide wird man nur dann einsetzen, wenn ihre Eigenfärbung nicht stört.

Le A 21 214

Als Diamine C,b) können die gleichen wie unter B,c) beschrieben eingesetzt werden.

Unter "ungesättigten Polyesterharzen", die mit den erfindungsgemäßen Mitteln thixotropiert werden können, werden Mischungen $\alpha$,ß-ethylenisch ungesättigter Polyester in damit copolymerisierbaren ungesättigten Monomeren verstanden.

$\alpha$,ß-Ethylenisch ungesättigte Polyester sind die üblichen Polykondensationsprodukte mindestens einer $\alpha$,ß-ethylenisch ungesättigten Dicarbonsäure mit in der Regel 4 oder 5 C-Atomen oder deren esterbildenden Derivaten, z.B. ihren Anhydriden, mit mindestens einer Polyhydroxyverbindung, insbesondere Dihydroxyverbindung mit 2 bis 8 C-Atomen - also Polyester, wie sie bei J. Björksten et al., "Polyesters and their Applications", Reinhold Publishing Corp., New York 1956, beschrieben sind.

Die Säurezahlen der Polyester liegen gewöhnlich zwischen 1 und 100, vorzugsweise zwischen 1 und 40, die OH-Zahlen zwischen 10 und 150, vorzugsweise zwischen 20 und 100, und die als Zahlenmittel bestimmten Molekulargewichte $\bar{M}_n$ zwischen ca. 300 und 5000, vorzugsweise zwischen ca. 400 und 3000 (dampfdruckosmometrisch gemessen in Dioxan und Aceton; bei differierenden Werten wird der niedrigere als der korrekte angesehen). In der gleichen Weise wird das Molekulargewicht der Komponente B bestimmt.

Le A 21 214

0075119

Als mit den $\alpha$,ß-ethylenisch ungesättigten Polyestern copolymerisierbares ungesättigtes Monomer wird vornehmlich Styrol eingesetzt.

Die erfindungsgemäßen Mittel werden in Mengen eingesetzt, die von der Art des Polyesterharzes und vom Grad der gewünschten Thixotropie abhängen. In der Regel sind 0,5 bis 10, vorzugsweise 0,5 bis 1,5, Gew.-%, bezogen auf Polyesterharz (ohne andere Hilfsmittel, Füll- und Verstärkerstoffe) wirksam. Bei einem Gehalt von 10 Gew.-% Thixotropiermittel erhält man stark pastöse Harze.

Es ist natürlich auch möglich, das erfindungsgemäße Mittel mit Polyesterharz zu einer Stammpaste anzurühren, die dann ihrerseits als Thixotropiermittel eingesetzt werden kann.

Die erfindungsgemäß thixotropierten Polyesterharze eignen sich hervorragend zur Herstellung von Überzügen, Laminaten und Spachtelmassen.

Zusätze von 0.1 bis 0.5 Gew.-%, bezogen auf Oligoesteramid B, Magnesiumoxid-salzartig im Oligoesteramid B - gebunden - bewirken eine verbesserte Benetzung von Füllstoffen.

Le A 21 214

Beispiele

Herstellung des Esteramids:

A)    10 Mol Sojaölfettsäure, 10 Mol dimerisierter Fettsäure (Molekulargewicht = 590), 3,8 Mol Perhydrobisphenol-A und 11,5 Mol Ethylendiamin werden unter Rühren und Einleiten von Stickstoff innerhalb von 8 Stunden auf 210°C aufgeheizt und so lange bei dieser Temperatur gehalten, bis das Harz eine Säurezahl kleiner als 20 erreicht hat. Nach dem Erstarren erhält man ein durchscheinendes, dunkles und zähes Harz mit einer Säurezahl von 10, einem -CO-NH-Gehalt von 10 Gew.-% und einem -C-O-Gehalt von 3,2 Gew.-%.
$$\underset{O}{\overset{\|}{}}$$

B)    10 Mol Sojaölfettsäure, 10 Mol dimerisierter Fettsäure, 0,58 Mol Perhydrobisphenol-A und 0,95 Mol Ethylendiamin werden - wie unter A) beschrieben - kondensiert. Man erhält ein Harz mit einer Säurezahl von 20, einem CO-NH-Gehalt von 8,1 Gew.-% und einem -C-O-Gehalt von 4,8 Gew.-%.
$$\underset{O}{\overset{\|}{}}$$

Herstellung ungesättigter Polyesterharze:

Durch Schmelzkondensation unter Stickstoffatmosphäre wurden aus den Ausgangskomponenten bei einer Temperatur von 180 - 190°C Polyester hergestellt, mit 0,02 Gew.-% Hydrochinon versetzt und 65 gew.-%ig in Styrol gelöst.

Le A 21 214

|  | A | B |
|---|---|---|
| Maleinsäure | 1,0 Mol | 1,0 Mol |
| Norbornendicarbonsäure | 1,0 Mol | - |
| Phthalsäure | - | 0,61 Mol |
| Propylenglykol | - | 1,04 Mol |
| Ethylenglykol | 0,9 Mol | - |
| Diethylenglykol | 1,2 Mol | - |

| | A | B |
|---|---|---|
| Säurezahl | max.10 | max.35 |
| Viskosität, gemessen 65 gew.-%ig in Styrol bei 20°C | 500 mPas | 1400 mPas |

## Beispiele 1 - 5

Für die nachfolgenden Beispiele wurden die in den nachfolgenden Tabellen angegebenen Zusätze bei 80 - 90°C im Polyesterharz gelöst und dieses anschließend auf 20°C abgekühlt. Nach 24-stündigem Stehen wurde der Viskositätsverlauf in einem Viskosimeter der Fa. Brookfield, Typ RV, bestimmt. Die linke Spalte gibt jeweils die Viskosität bei wachsender, die rechte die Viskosität bei sinkender Umdrehungszahl an.

## Beispiel 1

Polyesterharz: A

Le A 21 214

Ethylendiamin-bisphthalimid: 0,16 Gew.-%

Stearinsäure-N-cyclohexylamid: 0,33 Gew.-%

Esteramid A: 0,33 Gew.-%

Spindel: Nr. 6

| Umdrehungen/Minute | Viskosität $[\overline{m}Pa\underline{s}]$ | |
|---|---|---|
| 0,5 | 140.000 | 50.000 |
| 1,0 | 90.000 | 35.000 |
| 2,5 | 52.000 | 16.000 |
| 5,0 | 32.000 | 12.000 |
| 10,0 | 21.000 | 8.000 |
| 20,0 | 13.500 | 6.500 |
| 50,0 | 7.500 | 4.900 |
| 100,0 | 4.700 | |

### Beispiel 2

Polyesterharz: B

Ethylendiamin-bisphthalimid: 0,33 Gew.-%

Behensäure-N-cyclohexylamid: 0,65 Gew.-%

Spindel: Nr. 6

| Umdrehungen/Minute | Viskosität $[\overline{m}Pa\underline{s}]$ | |
|---|---|---|
| 0,5 | 260.000 | 100.000 |
| 1,0 | 135.000 | 65.000 |
| 2,5 | 78.000 | 38.000 |
| 5,0 | 46.000 | 23.000 |
| 10,0 | ⊥7.500 | 15.500 |
| 20,0 | 16.000 | 10.250 |

Le A 21 214

| Umdrehungen/Minute | Viskosität $[\overline{m}Pa\underline{s}]$ | |
| --- | --- | --- |
| 50,0 | 10.000 | 6.800 |
| 100,0 | 6.250 | |

## Beispiel 3

Polyesterharz: B

Ethylendiamin-tetrahydrophthalsäure-bisimid: 0,33 Gew.-%
Stearinsäure-N-cyclohexylamid: 0,33 Gew.-%
Spindel: Nr. 6

| Umdrehungen/Minute | Viskosität $[\overline{m}Pa\underline{s}]$ | |
| --- | --- | --- |
| 0,5 | 90.000 | 30.000 |
| 1,0 | 60.000 | 20.000 |
| 2,5 | 38.000 | 14.000 |
| 5,0 | 22.000 | 9.000 |
| 10,0 | 14.000 | 6.500 |
| 20,0 | 9.500 | 5.200 |
| 50,0 | 6.000 | 4.300 |
| 100,0 | 4.200 | |

## Beispiel 4

Polyesterharz: B

Ethylendiamin-bisphthalimid: 0,65 Gew.-%
Stearinsäure-N-cyclohexylamid: 0,33 Gew.-%
Spindel: Nr. 6

Le A 21 214

- 11 -

| Umdrehungen/Minute | Viskosität $[mPas]$ | |
|---|---|---|
| 0,5 | 60.000 | 20.000 |
| 1,0 | 37.000 | 17.000 |
| 2,5 | 20.000 | 12.000 |
| 5,0 | 14.000 | 8.000 |
| 10,0 | 9.000 | 6.000 |
| 20,0 | 6.500 | 5.000 |
| 50,0 | 4.200 | 4.000 |
| 100,0 | 3.700 | |

**Beispiel 5**

Polyesterharz: A

Esteramid B: 1 Gew.-%

Behensäure-N-cyclohexylamid: 1 Gew.-%

Spindel: Nr. 6

| Umdrehungen/Minute | Viskosität $[mPas]$ | |
|---|---|---|
| 0,5 | 180.000 | 50.000 |
| 1,0 | 110.000 | 30.000 |
| 2,5 | 60.000 | 18.000 |
| 5,0 | 32.000 | 15.000 |
| 10,0 | 19.000 | 9.000 |
| 20,0 | 12.000 | 7.000 |
| 50,0 | 10.000 | 5.200 |
| 100,0 | 4.950 | |

Le A 21 214

Patentansprüche

1.  Thixotropiermittel bestehend aus

A)  mindestens einem Cyclohexylamid einer gesättigten Fettsäure mit mindestens 10 C-Atomen und

B)  einem oder mehreren oligomeren Esteramiden mit einem mittleren Molekulargewicht $\bar{M}_n$ von 600 bis 3000, mit einem Gehalt an Carbonsäureamidgruppen -CO-NH- von 1,5 bis 15 Gew.-% und einem Gehalt an Carboxylatgruppen $-\overset{\text{O}}{\underset{\text{"}}{C}}-O-$ von 2 bis 13 Gew.-% aus

a)  ungesättigten Fettsäuren mit mindestens 10 C-Atomen und aliphatischen Dicarbonsäuren mit mindestens 10 C-Atomen, .

b)  cycloaliphatischen Diolen mit 6 bis 18 C-Atomen und

c)  aliphatischen Diaminen mit 2 bis 10 C-Atomen und/oder

C)  einem oder mehreren Bisimiden aus

a)  aliphatischen, cycloaliphatischen oder aromatischen, cyclische Imide bildenden Dicarbonsäuren mit 4 bis 12 C-Atomen und

Le A 21 214

b)    aliphatischen Diaminen mit 2 bis 10 C-
       Atomen,

mit der Maßgabe, daß das Gewichtsverhältnis der
Komponenten A:B:C von 1:0,4:1 bis 1:2,3:2,5 oder
- in Abwesenheit von B oder C - das Gewichtsverhältnis der Komponenten A:B oder A:C von 1:0,4 bis
1:1,97 betragen.

2.    Thixotropiermittel nach Anspruch 1, dadurch gekennzeichnet, daß die Komponente B ein mittleres
       Molekulargewicht $\bar{M}_n$ von 750 bis 2500 aufweist.

3.    Thixotropiermittel nach Ansprüchen 1 und 2, dadurch
       gekennzeichnet, daß das Gewichtsverhältnis der Komponenten A:B:C von 1:0,7:1 bis 1:1,5:2,0 oder - in
       Abwesenheit von B oder C - das Gewichtsverhältnis
       A:B oder A:C von 1:0,6 bis 1:1,5 betragen.

## EUROPÄISCHER RECHERCHENBERICHT

Europäisches Patentamt

0075119

Nummer der Anmeldung

EP 82 10 7684

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 09 D 5/04 |
| D,A | DE-B-1 273 192 (BAYER) <br> * Insgesamt * | 1 | C 09 D 7/00 |
| | --- | | |
| D,A | DE-B-1 182 816 (BASF) <br> * Insgesamt * | 1 | |
| | ----- | | |

RECHERCHIERTE SACHGEBIETE (Int. Cl. 3)

C 09 D 5/04
C 09 D 7/00
C 08 L 67/06

Der vorliegende Recherchenbericht wurde für alle Patentansprüche erstellt.

| Recherchenort <br> DEN HAAG | Abschlußdatum der Recherche <br> 07-01-1983 | Prüfer <br> DE ROECK R.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82